# FASCICULE DE BREVET EUROPEEN

(11) **EP 1 862 720 B1**
(45) Date de publication et mention de la délivrance du brevet: **30.06.2010**
(21) Numéro de dépôt: 07356073.2
(22) Date de dépôt: 29.05.2007
(51) Int. Cl.: F16L 37/42, F16L 37/086

(54) **Elément femelle de raccord et raccord rapide incorporant un tel élément**
Verbindungssteckerelement und Schnellverbindung, die ein solches Element beinhaltet
Female connection element and quick connection including such an element

(30) Priorité: 30.05.2006 FR 0604801
(43) Date de publication de la demande: 05.12.2007
(73) Titulaire: STAUBLI FAVERGES, 74210 FAVERGES (FR)
(72) Inventeur: Tiberghien, Alain-Christophe, 74320 Servier (FR); Chambaud, Antoine, 74210 Giez (FR)
(74) Mandataire: Myon, Gérard Jean-Pierre

(56) Documents cités:
- EP-A1- 1 531 297
- FR-A1- 2 438 226
- US-A- 4 951 977

## Description

L'invention a trait à un élément femelle de raccord rapide ainsi qu'à un raccord rapide pour une installation de manutention de fluide sous pression qui comprend, entre autres, un tel élément femelle.

Dans le domaine de la jonction amovible de canalisations parcourues par un fluide sous pression, il est connu d'utiliser un élément femelle de raccord qui comprend des moyens commandés de verrouillage d'un élément mâle en configuration emmanchée dans l'élément femelle, c'est-à-dire en configuration raccordée des canalisations.

Il est connu de EP-A-1 531 297 d'utiliser des doigts de verrouillage mobiles en translation dans des logements inclinés par rapport à l'axe d'emmanchement des éléments mâle et femelle. Chaque doigt de verrouillage est muni d'une patte, faisant saillie radialement par rapport au corps de l'élément femelle et destinée à interagir avec une bague de commande de la position du doigt de verrouillage. Cette bague de commande exerce sur la patte de chaque doigt de verrouillage des efforts dirigés parallèlement à l'axe d'emmanchement. Dans ce dispositif connu, le déplacement des doigts de verrouillage dans leur logement pose des difficultés. En effet, les efforts exercés par la bague de commande étant dirigés parallèlement à l'axe d'emmanchement, les doigts de verrouillage ont tendance à basculer dans leurs logements. Ce basculement s'oppose à l'action de la bague de commande pour engager les doigts de verrouillage dans la gorge périphérique de l'élément mâle ou pour les en extraire.

Par ailleurs, FR-A-2 438 226 décrit un élément femelle de raccord comprenant des doigts de verrouillage mobiles dans des logements inclinés d'un corps de l'élément femelle. Chaque doigt de verrouillage comporte une entaille, qui définit un bec en saillie radiale par rapport au corps de l'élément femelle, ce bec étant destiné à coopérer avec une bague de commande du déplacement du doigt. Or, dans ce dispositif, les efforts exercés par la bague de commande sur chaque doigt sont appliqués au niveau de l'entaille du doigt et tendent à fragiliser les doigts lors du déverrouillage. US-A-4,951,977 décrit également un élément femelle de raccord dans lequel une bague de commande du déplacement de doigts de verrouillage agit au niveau d'une entaille de chaque doigt. Il en résulte une tenue mécanique limitée des doigts de verrouillage, comme dans le dispositif décrit dans FR-A-2 438 226.

C'est à ces inconvénients qu'entend plus particulièrement remédier l'invention en proposant un élément femelle de raccord rapide susceptible de coopérer avec un élément mâle et pourvu d'un système de verrouillage dont la mise en oeuvre est aisée et qui présente une bonne tenue mécanique.

A cet effet, l'invention a pour objet un élément femelle de raccord rapide destiné à la jonction amovible de canalisations de fluide sous pression, cet élément étant apte à recevoir un élément mâle en emmanchement selon un axe longitudinal et étant équipé d'au moins un organe de verrouillage allongé, mobile en translation parallèlement à un axe oblique par rapport à l'axe d'emmanchement des éléments, cet organe étant pourvu d'une première extrémité, destinée à être engagée dans une gorge périphérique de l'élément mâle emmanché dans l'élément femelle, et d'une tête faisant saillie radialement par rapport à une surface radiale externe du corps de l'élément femelle et engagée entre un premier et un deuxième composants commandés par une bague principale montée autour du corps de l'élément femelle avec possibilité de translation parallèlement à l'axe d'emmanchement, la tête de l'organe de verrouillage étant pourvue d'au moins une oreille définissant une première surface, orientée vers la première extrémité et apte à recevoir en appui glissant une surface correspondante du premier composant, le plan de glissement entre la première surface et la surface correspondante du premier composant étant incliné selon un angle compris entre environ 75° et 105° par rapport à l'axe de translation de l'organe de verrouillage, caractérisé en ce que la tête comporte deux oreilles disposées de part et d'autre d'une tige de jonction entre la première extrémité et la tête.

Grâce à l'invention, le système de verrouillage comprenant au moins un organe ou doigt de verrouillage et la bague principale commandant les premier et deuxième composants remplit efficacement sa fonction de blocage d'un élément mâle en configuration emmanchée, tout en assurant un passage aisé entre les positions verrouillée et déverrouillée du doigt de verrouillage. En effet, grâce à l'inclinaison du plan de glissement par rapport à l'axe de translation de l'organe de verrouillage, l'effort exercé par le premier composant sur le doigt de verrouillage est sensiblement parallèle à l'axe de déplacement en translation du doigt. Cet effort est donc transmis efficacement au doigt pour le déplacer en translation dans son logement entre les positions verrouillée et déverrouillée, en minimisant son basculement. De plus, la tige du doigt de verrouillage permet de renforcer la tenue mécanique du doigt soumis à l'action du premier composant, alors que les deux oreilles, disposées de part et d'autre de la tige, contribuent à équilibrer l'effort exercé par le premier composant sur le doigt de verrouillage et facilitent le déplacement en translation de celui-ci sans basculement latéral. L'agencement des deux oreilles de part et d'autre de la tige permet également de limiter l'encombrement du doigt de verrouillage par rapport à un doigt de verrouillage de l'état de la technique présentant un bec.

Selon d'autres caractéristiques avantageuses de l'invention :
- la première surface est inclinée selon un angle compris entre environ 75° et 105° par rapport à l'axe de translation de l'organe ;
- la surface correspondante du premier composant est inclinée selon un angle compris entre environ 75° et 105° par rapport à l'axe de translation de l'organe ;
- la tête forme au moins une deuxième surface, orientée à l'opposé de la première extrémité et apte à recevoir en appui glissant une surface correspondante du deuxième composant, le plan de glissement entre la deuxième surface et la surface correspondante du deuxième composant étant incliné selon un angle compris entre environ 75° et 105° par rapport à l'axe de translation de l'organe ;
- le plan de glissement entre la première surface et la surface correspondante du premier composant est incliné par rapport à l'axe de translation de l'organe selon un angle compris entre environ 75° et 90° ;
- le plan de glissement entre la deuxième surface et la surface correspondante du deuxième composant est incliné par rapport à l'axe de translation de l'organe selon un angle compris entre environ 75° et 90° ;
- la tige de l'organe est destinée à être reçue dans une fente du premier composant, la première surface définie par chaque oreille étant apte à recevoir en appui glissant une surface correspondante d'une portion latérale de la fente ;
- le premier composant est formé par une bague fendue distincte de la bague principale et apte à être déplacée en translation, parallèlement à l'axe d'emmanchement et en direction de l'organe, sous l'action de la bague principale ;
- le deuxième composant est une bague secondaire distincte de la bague principale et apte à coulisser par rapport à la bague principale, parallèlement à l'axe d'emmanchement, sous l'action de l'organe et de moyens élastiques ;
- une même bague, distincte de la bague principale, constitue les premier et deuxième composants et est apte à être déplacée en translation parallèlement à l'axe d'emmanchement, sous l'action de la bague principale et de moyens élastiques ;
- chaque oreille de l'organe de verrouillage est apte à être reçue dans une rainure de la bague constituant les premier et deuxième composants, la première surface définie par l'oreille étant apte à recevoir en appui glissant une surface correspondante d'un bord de la rainure, ce bord appartenant au premier composant.

L'invention concerne également un raccord rapide pour une installation de manutention de fluide sous pression qui comprend un élément mâle et un élément femelle, et dont l'élément femelle est tel que décrit ci-dessus.

Un tel raccord est plus facile à manipuler et plus fiable que ceux de l'état de la technique. Il peut être appliqué dans le domaine du remplissage des réservoirs de véhicule automobile, auquel cas l'élément mâle est raccordé à une canalisation d'alimentation d'un réservoir de carburant de véhicule.

Les caractéristiques et avantages de l'invention apparaîtront dans la description qui va suivre de deux modes de réalisation d'un élément femelle et d'un raccord rapide conformes à l'invention, donnée uniquement à titre d'exemple et faite en se référant aux dessins annexés dans lesquels :
- la figure 1 est une coupe longitudinale d'un élément femelle de raccord conforme à un premier mode de réalisation de l'invention ;
- la figure 2 est une coupe longitudinale d'un raccord conforme à l'invention incorporant l'élément femelle de la figure 1, lors de l'emmanchement de ses éléments mâle et femelle ;
- la figure 3 est une vue analogue à la figure 2 lorsque les éléments mâle et femelle sont en position emmanchée ;
- la figure 4 est une vue à plus grande échelle du détail IV de la figure 3 lors du désaccouplement des éléments mâle et femelle ;
- la figure 5 est une vue à plus grande échelle du détail V de la figure 4, la dimension des efforts ayant été augmentée pour une meilleure visualisation ;
- la figure 6 est une vue en perspective et à plus grande échelle d'un doigt de verrouillage de l'élément femelle représenté aux figures 1 à 3 ;
- la figure 7 est une vue en perspective et à plus grande échelle de composants de verrouillage et déverrouillage de l'élément femelle représenté aux figures 1 à 3 ;
- la figure 8 est une vue analogue à la figure 4 pour un raccord incorporant un élément femelle conforme à un deuxième mode de réalisation de l'invention, lors du désaccouplement de ses éléments mâle et femelle ;
- la figure 9 est une vue en perspective et à plus grande échelle d'un doigt de verrouillage de l'élément femelle de la figure 8 ; et
- la figure 10 est une vue en perspective et à plus grande échelle de composants de verrouillage et déverrouillage de l'élément femelle de la figure 8.

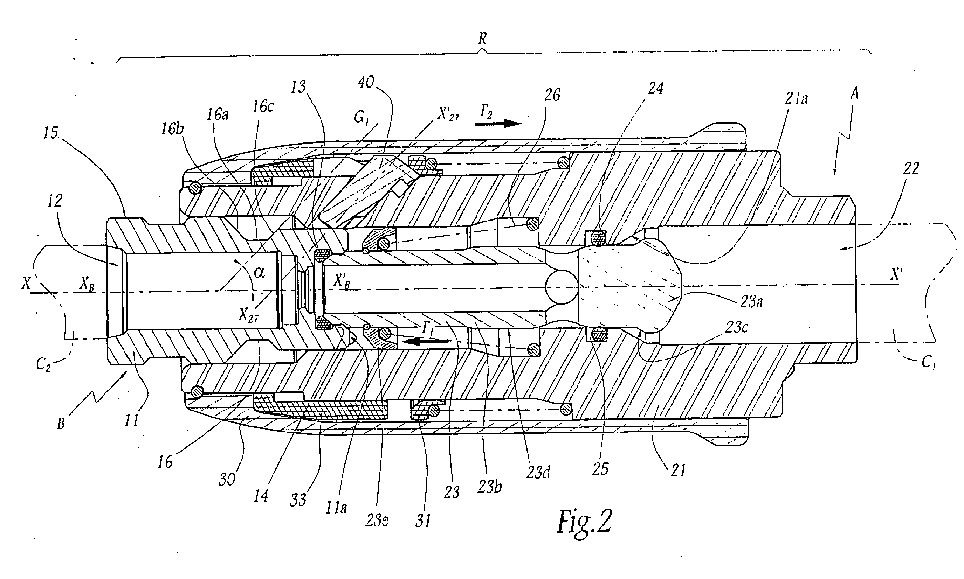

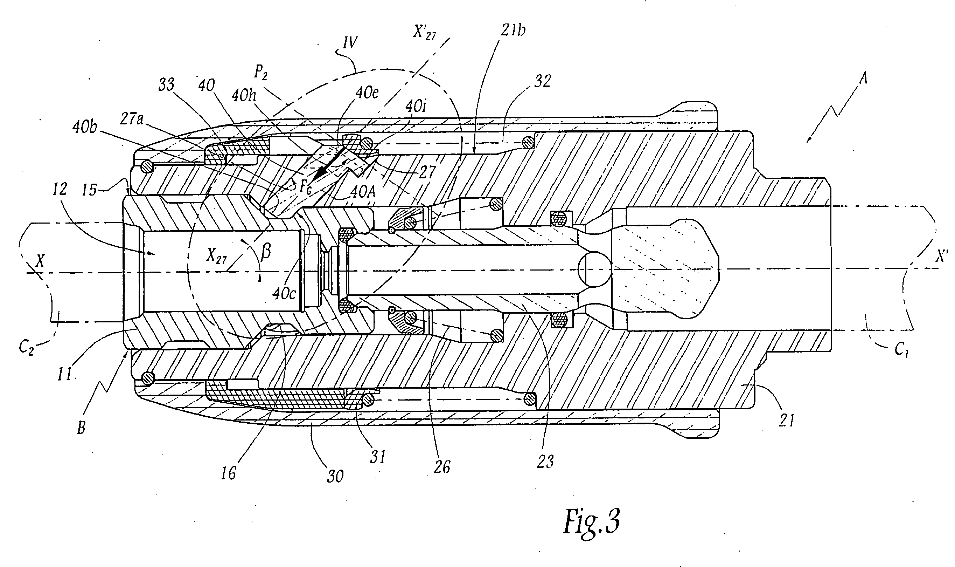

Le raccord rapide R représenté sur les figures 2 et 3 comprend un élément femelle A et un élément mâle B prévus pour s'emmancher l'un dans l'autre dans la direction d'un axe X-X' , qui est un axe longitudinal commun aux éléments A et B.

La partie arrière de l'élément femelle A est raccordée fluidiquement à une première canalisation C₁, alors que la partie arrière de l'élément mâle B est raccordée à une seconde canalisation C₂. A titre d'exemple, l'élément mâle B est monté sur un véhicule automobile et la canalisation C₂ sert à alimenter le réservoir de carburant non représenté de ce véhicule en gaz, sous une pression de l'ordre de 250 bars, alors que l'élément femelle A est relié par la canalisation C₁ à une source non représentée de carburant sous pression. Dans ce cas, l'élément femelle A peut équiper une station service et être destiné à coopérer successivement avec les éléments mâles B montés sur différents véhicules automobiles.

L'élément mâle B comprend un corps tubulaire 11 sur lequel est raccordée la canalisation C₂ et qui définit un canal interne 12 de circulation de fluide. Ce canal peut constituer un logement pour un clapet anti-retour non représenté. Un joint torique 13 est monté dans une gorge périphérique interne 14 du corps 11, de manière à assurer l'étanchéité du raccordement des canalisations C₁ et C₂ en position emmanchée des éléments A et B.

Sur sa surface radiale externe 15, le corps 11 est pourvu d'une gorge périphérique 16 dont le profil est défini par un fond 16a plat et des côtés 16b et 16c divergents en s'éloignant du fond 16a. Ainsi, le fond 16a est cylindrique, alors que les côtés 16b et 16c sont tronconiques.

L'élément mâle B est à symétrie de révolution autour d'un axe X_{B}-X'_{B} qui est confondu avec l'axe X-X' lors de l'emmanchement de cet élément mâle dans l'élément femelle A.

On note G₁ la génératrice de la surface du côté 16c de la gorge 16 qui est le plus proche de l'extrémité 11a du corps 11 destinée à être introduite dans l'élément A. Cette génératrice est rectiligne et oblique par rapport à l'axe X_{B}-X'_{B}, avec un angle d'obliquité α égal à environ 45°. La surface engendrée par la génératrice G₁ est donc une surface tronconique de demi-angle au sommet α.

L'élément femelle A comprend un corps 21 également tubulaire et sur lequel est raccordée la canalisation C₁. Ce corps définit un canal central 22 dans lequel est disposé un clapet 23 mobile parallèlement à un axe X_{A}-X'_{A} qui est un axe central de l'élément A, confondu avec l'axe X-X' lors de l'emmanchement des éléments A et B.

Le clapet 23 comprend une partie pleine 23a et une partie creuse 23b, la partie pleine 23a ayant une surface externe 23c cylindrico-conique destinée à venir en appui contre un siège 21a formé par le corps 21. Un joint torique 24 est installé dans une gorge interne 25 du corps 21 et destiné à assurer l'étanchéité avec la surface 23c ou avec la surface radiale externe 23d de la partie 23b.

Un ressort 26 exerce sur une collerette 23e du clapet 23 un effort élastique F₁ tendant à plaquer la partie 23a contre le siège 21a, c'est-à-dire à fermer l'élément femelle A.

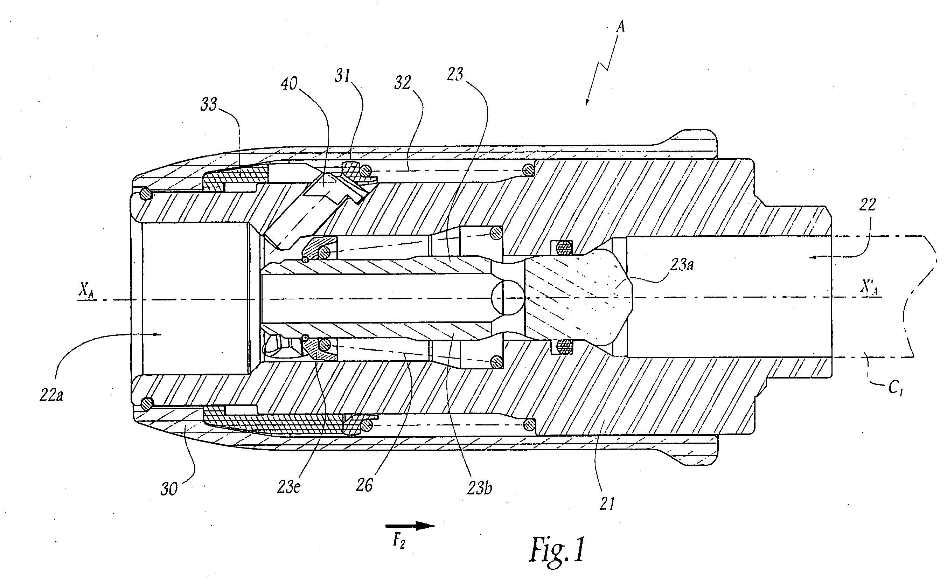

Une bague principale 30 est montée autour du corps 21 et est mobile en translation par rapport à celui-ci et parallèlement à l'axe X_{A}-X'_{A}, comme représenté par la flèche F₂ à la figure 1.

Cinq doigts de verrouillage 40 sont prévus pour être partiellement engagés dans la gorge 16 de l'élément B dans la configuration emmanchée représentée à la figure 3.

Chaque doigt 40 est disposé dans un logement 27 ménagé dans le corps 21, les dimensions du logement 27 étant telles que la surface 27a délimitant le logement peut coopérer avec la surface externe 40a d'une partie cylindrique 40A du doigt 40, à génératrice droite et à base circulaire, pour guider le doigt 40 en translation.

La surface 27a forme une butée 27c sur laquelle vient en appui un talon 40f du doigt 40, ce qui limite le mouvement du doigt vers le canal 22.

Le logement 27 est débouchant à la fois au niveau du canal 22 et au niveau d'un volume V défini entre la surface radiale externe 21b du corps 21 et la surface radiale interne 30b de la bague principale 30.

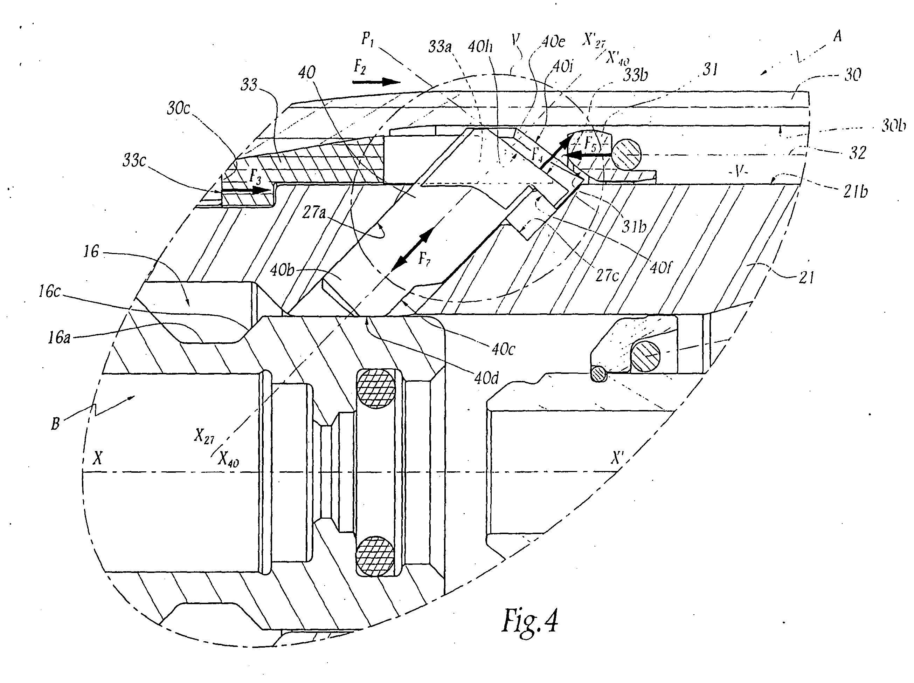

Le logement 27, représenté à plus grande échelle à la figure 4, s'étend dans la direction d'un axe X₂₇-X'₂₇ qui est oblique par rapport à l'axe X_{A}-X'_{A}, c'est-à-dire à l'axe X-X' lorsque les éléments mâle et femelle sont en configuration d'emmanchement. On note β l'angle d'obliquité entre les axes X₂₇-X'₂₇ et X_{A}-X'_{A}. Cet angle β est choisi égal à l'angle α.

En pratique, les angles α et β peuvent avoir des valeurs comprises entre 15 et 65°, de préférence entre 30 et 55°. Les axes X₂₇-X'₂₇ et X_{A}-X'_{A} sont convergents en direction de l'embouchure 22a du canal 22 par laquelle est introduit l'élément mâle B.

Chaque doigt 40 est pourvu d'une extrémité 40b qui est destinée à faire saillie dans le canal 22 à partir du logement 27 pour être engagée dans la gorge 16. L'extrémité 40b est délimitée par une surface 40c tronconique et concave, de demi-angle au sommet, par rapport à l'axe longitudinal X₄₀-X'₄₀ de la partie 40A, de valeur égale à celle de α et de rayon de courbure analogue à celui de la surface formant le côté 16c, de telle sorte que l'extrémité 40b et le côté 16c sont complémentaires au niveau de la surface 40c, ce qui garantit un appui surfacique entre le doigt 40 et le corps 11.

L'extrémité 40b est également délimitée par une surface 40d en portion de cylindre, à section circulaire de géométrie complémentaire de celle du fond 16a de la gorge 16.

Il est ainsi possible d'obtenir un appui du doigt 40 dans la gorge 16 à la fois sur son fond 16a et sur son côté 16c. En variante, l'extrémité 40b peut être en appui sur le bord 16c sans contact entre la surface 40d et le fond 16a car la coopération de la surface 27c et du talon 40f limite le déplacement centripète du doigt 40. Dans la mesure où elle ne vient pas en appui contre le fond 16a, la surface 40d peut avoir une géométrie autre que celle mentionnée ci-dessus. Elle peut être aplatie, pour autant qu'elle ne gêne pas l'appui surfacique entre la surface 40c et le bord 16c.

Lorsqu'il est en place dans le logement 27, le doigt 40 a son axe X₄₀-X' ₄₀ confondu avec l'axe X₂₇-X'₂₇.

Le doigt 40 est également pourvu d'une tête 40e faisant saillie radialement par rapport à la surface 21b à l'extérieur du logement 27. La tête 40e comporte deux oreilles 40g latérales, disposées de part et d'autre d'une tige 40j de jonction entre l'extrémité 40b et la tête 40e, et en particulier, dans ce mode de réalisation, entre la partie cylindrique 40A et la tête 40e. La tige 40j est de dimension transversale, prise transversalement par rapport aux oreilles 40g et à un axe longitudinal du doigt, au moins égale au diamètre de la partie cylindrique 40A. Les oreilles 40g définissent chacune une première surface 40h de la tête 40e, orientée vers l'extrémité 40b, sensiblement perpendiculairement à l'axe longitudinal X₄₀-X'₄₀ du doigt 40 qui est confondu avec l'axe X₂₇-X'₂₇ en configuration montée de l'élément A. Par ailleurs, la tête 40e forme une deuxième surface 40i qui est orientée à l'opposé de l'extrémité 40b, sensiblement perpendiculairement à l'axe X₄₀-X'₄₀.

Plus spécifiquement, les surfaces 40h et 40i peuvent être inclinées de manière acceptable, par rapport à l'axe longitudinal X₄₀-X'₄₀ du doigt 40, selon un angle respectif γ₁ ou γ₂ compris entre environ 75° et 105°.

La tête 40e est engagée entre une bague secondaire 31 et une bague fendue 33. La bague fendue 33 est commandée par la bague principale 30. La bague secondaire 31 est chargée par un ressort 32 et mobile parallèlement à l'axe X_{A}-X'_{A} dans le volume V défini entre la surface radiale externe 21b du corps 21 et la surface radiale interne 30b de la bague principale 30. Ainsi, la bague 31 est commandée par la bague principale 30 et par le ressort 32.

La face avant 33c de la bague fendue 33, orientée vers l'embouchure 22a de l'élément femelle A, est en appui contre un épaulement 30c ménagé sur la surface interne 30b de la bague principale 30. La tige 40j de chaque doigt 40 est engagée dans une fente 33a de la bague 33. Les surfaces 33b de portions latérales 33d de chaque fente 33a sont aptes à coopérer par appui glissant avec les premières surfaces 40h définies par les oreilles 40g de chaque doigt 40. Chaque surface 40h comprend une première portion 40h₁, située du côté de la bague 33 et de l'épaulement 30c par rapport à l'axe X₄₀-X'₄₀, et une deuxième portion 40h₂, située à l'opposé de la bague 33 du côté de la bague 31 par rapport à l'axe X₄₀-X'₄₀. Ainsi, les portions 40h₁ et 40h₂ s'étendent de part et d'autre de l'axe X₄₀-X'₄₀. Chaque surface 33b est inclinée par rapport à une direction radiale de la bague 33, de manière à venir efficacement en appui glissant contre les portions successives 40h₁ et 40h₂ de chaque surface 40h. En particulier, la surface 33b est sensiblement parallèle à la surface 40h, ce qui permet un appui surfacique de la surface 33b sur la surface 40h correspondante.

A partir de la position emmanchée des éléments A et B, lorsque la bague principale 30 de l'élément A est déplacée manuellement par un opérateur en direction de l'arrière du corps 21, c'est-à-dire en direction de la canalisation C₁, par un effort dans le sens de la flèche F₂ de la figure 4, l'épaulement 30c exerce sur la face 33c de la bague 33 un effort F₃ qui a pour effet de déplacer chaque fente 33a par rapport à la tige 40j, en entraînant les surfaces 33b des portions latérales 33d de chaque fente 33a en direction des surfaces 40h. Lorsque ces surfaces 33b entrent en contact avec les portions 40h₁ des surfaces 40h, elles exercent sur ces surfaces un effort F₄ qui a pour effet de déplacer chaque doigt 40 dans le logement 27 correspondant en direction du volume V, à l'encontre de l'effort exercé par le ressort 32. Du fait de l'inclinaison des surfaces 40h et 33b de la valeur choisie pour l'angle γ₁, le plan de glissement P₁ entre chaque surface 40h et la surface correspondante 33b, qui correspond au plan des surfaces 40h et 33b en appui glissant l'une contre l'autre, est incliné selon l'angle γ₁ et l'effort F₄ est sensiblement parallèle aux axes X₄₀-X'₄₀ et X₂₇-X'₂₇ confondus.

Le déplacement du doigt 40 dans le logement 27 sous l'action de la bague 33 permet l'extraction de son extrémité 40b de la gorge 16 et du canal 22. Le doigt 40 ne s'oppose alors pas à un retrait de l'élément mâle B hors du canal 22.

Le ressort 32 installé dans le volume V exerce sur la bague secondaire 31 un effort de rappel élastique F₅, dirigé vers la bague fendue 33 et le doigt 40. Lorsque l'effort exercé sur la bague principale 30 est relâché, l'effort F₅ est transmis à chaque doigt 40 sous la forme d'un effort F₆, visible à la figure 3, exercé par une surface 31b de la bague secondaire 31 sur la deuxième surface 40i de la tête 40e. La surface 31b est sensiblement parallèle à la surface 40i. Du fait de l'inclinaison de la surface 40i de la valeur choisie pour l'angle γ₂, le plan de glissement P₂ entre la surface 40i et la surface correspondante 31b, qui correspond au plan des surfaces 40i et 31b en appui glissant l'une contre l'autre, est incliné selon l'angle γ₂ et l'effort F₆ est sensiblement axial et parallèle aux axes X₄₀-X' ₄₀ et X₂₇-X'₂₇ confondus. Chaque doigt 40 est alors déplacé dans le sens inverse du mouvement précédemment mentionné, pour atteindre la position représentée aux figures 1 et 3 où il fait saillie dans le canal 22.

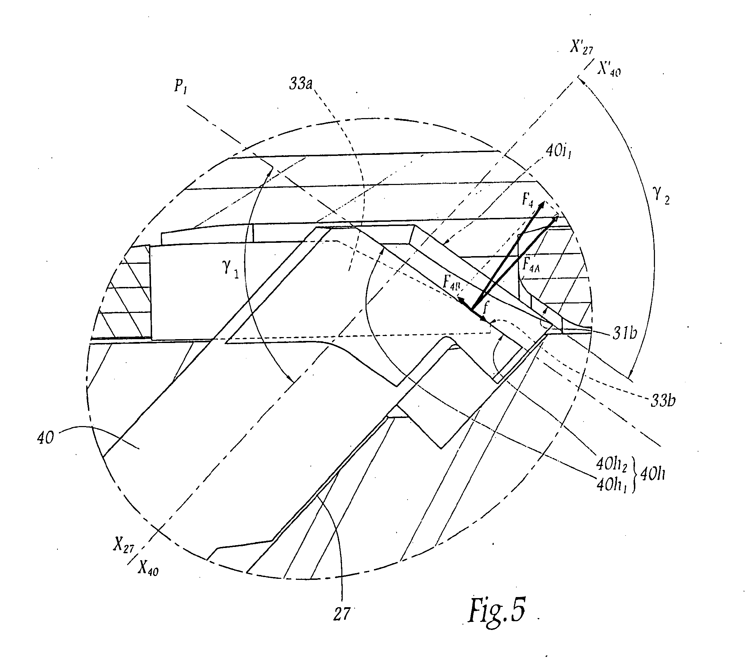

De manière avantageuse et comme réalisé dans le mode de réalisation décrit, la surface 40h est fuyante, c'est-à-dire que l'angle γ₁ d'inclinaison de la surface 40h par rapport à l'axe longitudinal X₄₀-X'₄₀ du doigt 40 est strictement inférieur à 90°, lorsqu'il est pris entre la portion 40h₁ de la surface 40h et la portion de l'axe X₄₀-X'₄₀ définie entre l'extrémité 40b du doigt 40 et la surface 40h. De cette manière, il est possible d'éliminer tout risque résiduel de basculement du doigt 40 dans son logement 27, comme illustré par le diagramme de forces à la figure 5. La figure 5 représente l'interaction entre une surface 33b et une surface 40h, étant entendu qu'une analyse similaire peut être menée pour l'interaction entre une surface 31b et une surface 40i fuyante, c'est-à-dire pour laquelle l'angle γ₂ est strictement inférieur à 90° lorsqu'il est pris entre une portion 40i₁ de la surface 40i située du côté de la bague 31 par rapport à l'axe X₄₀-X'₄₀ et la portion de l'axe X₄₀-X'₄₀ définie depuis la surface 40i à l'opposé de l'extrémité 40b du doigt 40.

L'effort F₄, correspondant à l'action de la surface 33b sur la surface 40h, est orienté perpendiculairement à la surface 40h. L'extrémité 33b exerce également un effort de frottement f sur la surface 40h. Cet effort f tend à faire basculer le doigt 40 dans le sens horaire sur la figure 5. Lorsque l'angle γ₁, pris comme précédemment, est strictement inférieur à 90°, l'effort F₄ possède non seulement une composante F_{4A}, parallèle à l'axe X₄₀-X'₄₀ de translation du doigt 40, qui correspond à la force active sur le doigt pour le déplacer en translation hors de la gorge 16, mais également une composante F_{4B}, perpendiculaire à l'axe X₄₀-X'₄₀ et qui génère un moment de basculement du doigt 40 opposé au moment de basculement résultant de l'effort f. Ainsi, grâce à cette composante F_{4B} qui s'oppose au basculement du doigt 40 dû à l'effort f, le coulissement du doigt 40 est favorisé.

Il est donc possible d'éliminer pratiquement tout moment tendant à faire basculer le doigt 40 dans son logement 27 en choisissant un angle γ₁ tel que les moments résultant des efforts f et F_{4B} s'équilibrent totalement. L'effort f dépend du coefficient de frottement à l'interface entre la surface 33b et la surface 40h. Dans l'exemple décrit, les surfaces en contact lors de l'interaction entre la surface 33b et la surface 40h sont respectivement en plastique et en acier. Dans ce cas, des résultats satisfaisants sont obtenus pour un angle γ₁ compris entre environ 75° et 85°.

De la même manière, le choix de l'orientation de la surface 40i et de la valeur de l'angle γ₂ permet de limiter, voire supprimer, les risques de basculement des doigts 40 lorsqu'ils sont soumis à l'action F₆ de la surface 31b et qu'ils se déplacent en direction de la gorge 16.

En outre, la tige 40j de chaque doigt de verrouillage 40, qui est de dimension transversale au moins égale au diamètre de la partie cylindrique 40A, assure une bonne tenue mécanique du doigt 40 soumis à l'action des bagues 31 et 33. La présence des deux oreilles 40g, disposées de part et d'autre de la tige 40j, permet également d'équilibrer l'action des bagues 31 et 33 sur chaque doigt 40 et ainsi de contribuer au déplacement des doigts sans basculement.

En l'absence d'effort exercé sur la bague principale 30 par l'opérateur, l'effort F₆ assure le maintien des doigts 40 dans la configuration de la figure 3, où ils verrouillent l'élément mâle B en configuration emmanchée dans le corps 21.

Il ressort de ce qui précède que chaque doigt 40 a un mouvement de translation représenté par la double flèche F₇ de la figure 4, commandé grâce à la bague principale 30 et qui a lieu parallèlement aux axes X₂₇-X'₂₇ et X₄₀-X'₄₀ confondus. En particulier, il n'est pas nécessaire d'agir au niveau de l'extrémité 40b pour faire coulisser la partie cylindrique 40A de sa position de la figure 3 à celle de la figure 2.

Lorsqu'on souhaite emmancher l'élément mâle B dans l'élément femelle A, on peut exercer sur la bague principale 30 l'effort F₂ comme représenté à la figure 2, ce qui permet de dégager les doigts 40 du canal 22, l'effort d'emmanchement à exercer étant alors principalement utilisé pour repousser le clapet 23 à l'encontre du ressort 26 et de la pression régnant dans la partie amont du conduit 22.

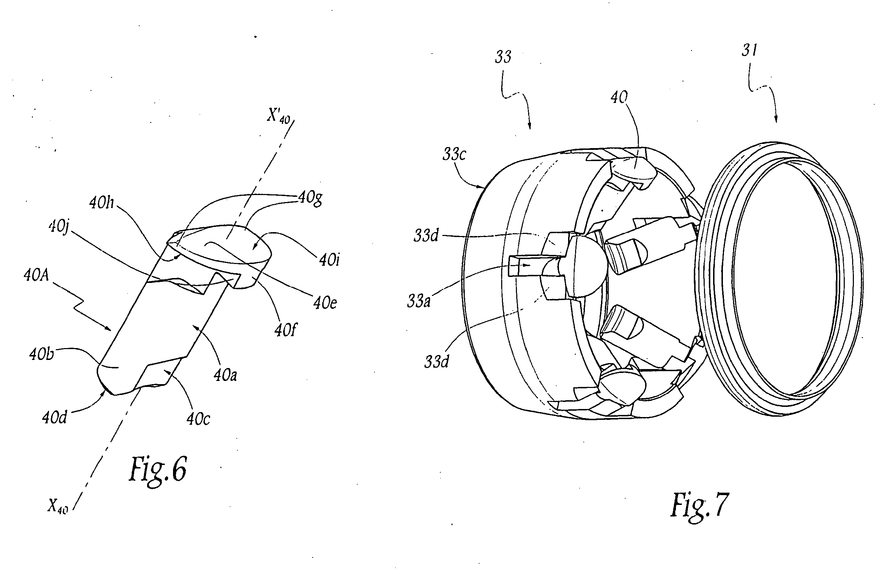

Comme les bagues 31 et 33 s'étendent tout autour du corps 21, comme montré à la figure 7, elles permettent de commander simultanément tous les doigts 40 coulissant dans des logements correspondants 27 du corps 21.

Il est également possible d'emmancher les éléments A et B sans agir sur la bague principale 30, l'extrémité 11a du corps 11 repoussant alors temporairement les doigts 40 vers l'intérieur des logements 27.

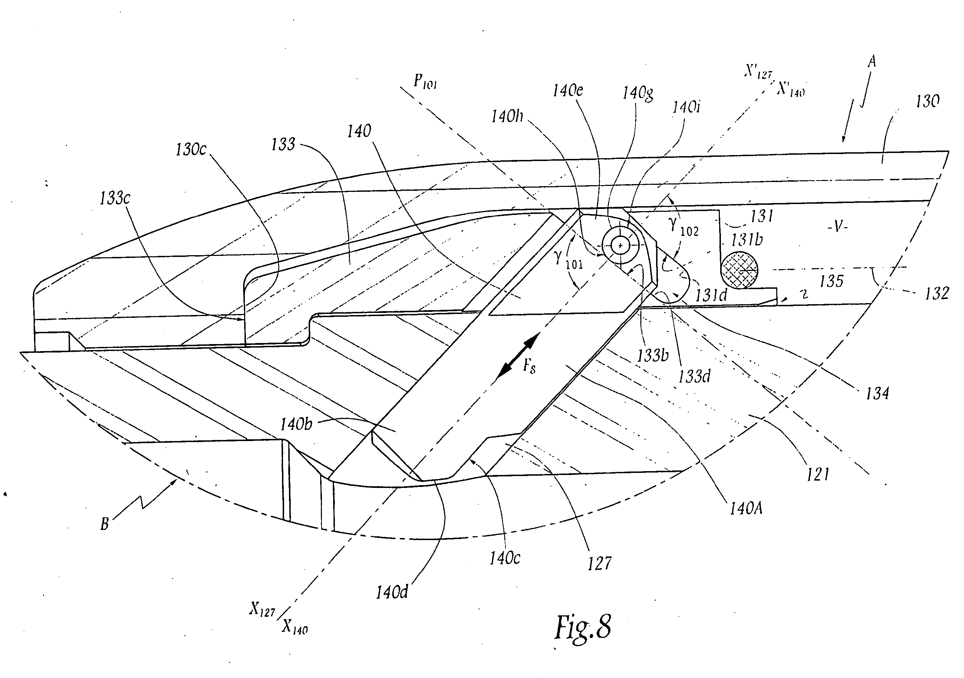

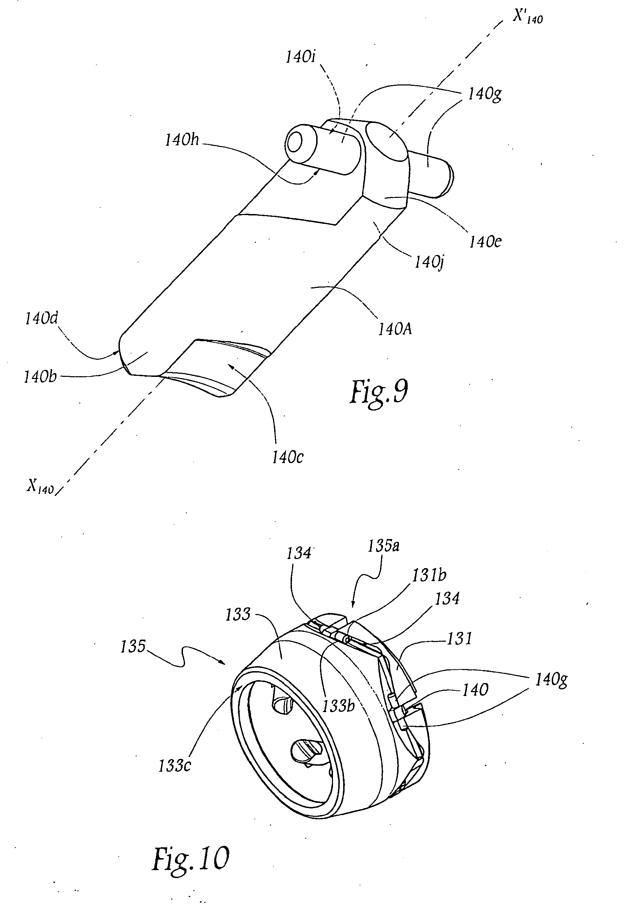

Dans le deuxième mode de réalisation représenté aux figures 8 à 10, les éléments analogues au premier mode de réalisation portent des références identiques augmentées de 100. Dans ce deuxième mode de réalisation, une bague principale 130 est montée autour d'un corps 121 de l'élément femelle A et est mobile en translation par rapport à celui-ci, parallèlement à l'axe central de l'élément A. L'élément femelle A comprend cinq doigts de verrouillage 140 prévus pour être chacun partiellement engagés dans une gorge 16 d'un élément mâle B, analogue à l'élément mâle du mode de réalisation précédent, emmanché dans l'élément femelle.

Chaque doigt 140 est disposé dans un logement 127 ménagé dans le corps 121 et débouchant à la fois au niveau du canal central de l'élément femelle A et au niveau d'un volume V défini entre la surface radiale externe du corps 121 et la surface radiale interne de la bague principale 130. Chaque logement 127 est sensiblement complémentaire d'une partie cylindrique 140A des doigts 140 et s'étend, de manière analogue au mode de réalisation précédent, dans la direction d'un axe X₁₂₇-X'₁₂₇ qui est oblique par rapport à l'axe central de l'élément femelle. Lorsqu'il est en place dans un logement 127, chaque doigt 140 a son axe X₁₄₀-X'₁₄₀ confondu avec l'axe X₁₂₇-X'₁₂₇.

Chaque doigt 140 est pourvu d'une extrémité 140b qui est destinée à faire saillie dans le canal central de l'élément femelle à partir du logement 127 pour être engagée dans la gorge 16. L'extrémité 140b est délimitée par une surface 140c tronconique et concave, complémentaire du côté 16c de la gorge 16. L'extrémité 140b est également délimitée par une surface 140d en portion de cylindre, à section circulaire de géométrie complémentaire de celle du fond 16a de la gorge 16. Ainsi, il est possible d'obtenir un appui surfacique de chaque doigt 140 dans la gorge 16.

Chaque doigt 140 est pourvu d'une tête 140e faisant saillie radialement par rapport à la surface radiale externe du corps 121, à l'extérieur du logement 127 correspondant. La tête 140e comporte deux oreilles 140g latérales, formées par deux pions cylindriques disposés dans l'alignement l'un de l'autre, de part et d'autre d'une tige 140j de jonction entre l'extrémité 140b et la tête 140e, et en particulier, dans ce mode de réalisation, entre la partie cylindrique 140A et la tête 140e. La tige 140j est de dimension transversale, prise transversalement par rapport aux oreilles 140g et à un axe longitudinal du doigt, égale au diamètre de la partie cylindrique 140A. A titre d'exemple, les oreilles 140g peuvent être formées par une goupille rapportée sur la tige 140j. Les pions 140g définissent chacun une première surface 140h de la tête 140e, orientée vers l'extrémité 140b du doigt 140. Les pions 140g forment également chacun une deuxième surface 140i qui est orientée à l'opposé de l'extrémité 140b. Les surfaces 140h et 140i appartiennent à la surface radiale externe des pions 140g.

La tête 140e est engagée dans une fente 135a d'une bague fendue 135 commandée par la bague principale 130. La bague fendue 135 comporte une partie avant 133, orientée vers l'embouchure de l'élément femelle, et une partie arrière 131. La bague fendue 135 est chargée par un ressort 132, au niveau de sa partie arrière 131, et mobile parallèlement à l'axe principal de l'élément femelle, dans le volume V défini entre le corps 121 et la bague principale 130. Chaque fente 135a de la bague 135 comporte, au niveau de ses parois latérales, deux rainures 134 inclinées de réception des pions 140g des doigts 140. La tige 140j de chaque doigt 140 est mobile dans une portion de la fente 135a correspondante, cette portion appartenant à la partie avant 133, avec les pions 140g reçus dans les rainures latérales 134. Les rainures 134 débouchent vers l'extérieur de la bague fendue 135, de sorte qu'un fond de chaque rainure 134 permet de limiter le mouvement du doigt 140 correspondant vers le canal central de l'élément femelle A.

La surface 133b du bord avant 133d de chaque rainure 134, situé du côté de la partie avant 133, est apte à coopérer par appui glissant avec la première surface 140h du pion 140g correspondant. De manière analogue, la surface 131b du bord arrière 131d de chaque rainure 134, situé du côté de la partie arrière 131, est apte à coopérer par appui glissant avec la deuxième surface 140i du pion 140g correspondant. Les surfaces 133b et 131b sont orientées sensiblement perpendiculairement à l'axe longitudinal X₁₄₀-X'₁₄₀ du doigt 140. Plus spécifiquement, les surfaces 133b et 131b peuvent être inclinées de manière acceptable, par rapport à l'axe X₁₄₀-X'₁₄₀, selon un angle respectif γ₁₀₁ et γ₁₀₂ compris entre environ 75 ° et 105 ° . De manière analogue au premier mode de réalisation de l'invention, les surfaces 133b et 131b sont avantageusement fuyantes au sens défini plus haut, de manière à limiter le basculement des doigts 140 dans leurs logements 127.

La face avant 133c de la bague fendue 135 est en appui contre un épaulement 130c ménagé sur la surface interne de la bague principale 130. A partir de la position emmanchée des éléments mâle B et femelle A du raccord conforme à ce deuxième mode de réalisation de l'invention, lorsque la bague principale 130 est déplacée manuellement par un opérateur en direction de l'arrière du corps 121, l'épaulement 130c exerce sur la face 133c de la bague 135 un effort qui a pour effet de déplacer, simultanément, chaque fente 135a par rapport à la tige 140j et chaque rainure 134 par rapport à un pion 140g. Ainsi, la surface 133b de chaque rainure 134 est déplacée en direction de la surface 140h du pion 140g correspondant. Lorsque les surfaces 133b entrent en contact avec les surfaces 140h, elles exercent sur ces surfaces un effort qui a pour effet de déplacer chaque doigt 140 dans le logement 127 correspondant en direction du volume V. Les surfaces 133b étant orientées sensiblement perpendiculairement à l'axe X₁₄₀-X'₁₄₀, le plan de glissement P₁₀₁ entre chaque surface 140h et la surface correspondante 133b, qui correspond au plan de la surface 133b en appui glissant contre la surface 140h, est sensiblement perpendiculaire à l'axe X₁₄₀-X'₁₄₀ et l'effort de déplacement exercé sur chaque doigt 140 est sensiblement parallèle à cet axe.

Lorsque l'effort exercé sur la bague principale 130 est relâché, l'effort de rappel élastique exercé par le ressort 132 sur la bague 135 au niveau de sa partie arrière 131 est transmis à chaque doigt 140 sous la forme d'un effort de déplacement dans le sens inverse du mouvement précédemment décrit.

En effet, l'effort de rappel élastique du ressort 132 a pour effet de déplacer les surfaces 131b des rainures 134 en direction des surfaces 140i des pions 140g.

Comme dans le premier mode de réalisation, chaque doigt 140 a donc un mouvement de translation dans le logement 127 correspondant, représenté par la double flèche F₈ de la figure 8, commandé grâce à la bague principale 130 et qui a lieu parallèlement aux axes X₁₂₇-X'₁₂₇ et X₁₄₀-X' ₁₄₀ confondus. Grâce à l'orientation des surfaces 133b et 131b sensiblement perpendiculairement à l'axe X₁₄₀-X'₁₄₀, les plans de glissement entre chaque surface 140h et la surface correspondante 133b et entre chaque surface 140i et la surface correspondante 131b, qui dans ce deuxième mode de réalisation correspondent respectivement aux plans des surfaces 133b et 131b en appui glissant contre les surfaces 140h et 140i, sont sensiblement perpendiculaires à l'axe X₁₄₀-X'₁₄₀ et les efforts de déplacement exercés sur les doigts 140 sont sensiblement parallèle à l'axe X₁₄₀-X'₁₄₀. Ceci limite le basculement des doigts 140 dans les logements 127 et permet une transmission d'efforts efficace aux doigts 140 pour les déplacer entre leurs positions verrouillée et déverrouillée.

De plus, comme dans le premier mode de réalisation, la tige 140j de chaque doigt 140 renforce la tenue mécanique du doigt, alors que l'action de la bague 135 au niveau des deux oreilles 140g disposées de part et d'autre de la tige 140j garantit un déplacement en translation du doigt 140 sans risque de basculement. En outre, la formation des oreilles 140g au moyen d'une goupille rapportée sur la tige 140j permet une fabrication aisée et économique des doigts de verrouillage d'un élément femelle de raccord conforme à l'invention.

Selon des variantes non représentées de l'invention, l'appui glissant entre une surface d'un doigt de verrouillage et une surface correspondante d'une bague peut mettre en jeu des surfaces courbes ou un appui ponctuel. Dans ce cas, le plan de glissement est le plan de glissement instantané au point de contact entre les surfaces, ce plan de glissement instantané étant incliné d'un angle compris entre environ 75° et 105° par rapport à l'axe de translation du doigt de verrouillage.

Dans les modes de réalisation décrits, l'invention est mise en oeuvre avec cinq doigts de verrouillage 40 ou 140 coopérant avec cinq fentes 33a ou 135a régulièrement espacées, ménagées dans la bague 33 ou 135. Cette configuration permet de répartir l'effort de blocage de l'élément mâle en configuration emmanchée autour de l'axe X-X' . L'invention peut cependant être mise en oeuvre avec un nombre différent de doigts de verrouillage.

Dans tous les cas, l'élément femelle A d'un raccord conforme à l'invention est adapté à un élément mâle standard qui peut, par exemple, être monté sur un véhicule automobile. L'invention ne nécessite pas de modifier l'élément mâle déjà utilisé sur des véhicules automobiles.

L'invention peut être utilisée dans des domaines autres que celui du remplissage de réservoirs de véhicules automobiles et, de façon générale, dans tout domaine où un raccordement sécurisé est recherché.

## Revendications

1. Elément femelle (A) de raccord rapide (R) destiné à la jonction amovible de canalisations (C₁, C₂) de fluide sous pression, ledit élément (A) étant apte à recevoir un élément mâle (B) en emmanchement selon un axe longitudinal (X-X'), ledit élément femelle (A) étant équipé d'au moins un organe de verrouillage allongé (40 ; 140), mobile en translation parallèlement à un axe (X₂₇-X'₂₇, X₄₀-X'₄₀ ; X₁₂₇-X'₁₂₇, X₁₄₀-X'₁₄₀) oblique par rapport à l'axe d'emmanchement (X-X') desdits éléments, cet organe étant pourvu d'une première extrémité (40b ; 140b), destinée à être engagée dans une gorge (16) périphérique d'un élément mâle (B) emmanché dans ledit élément femelle (A), et d'une tête (40e ; 140e) faisant saillie radialement par rapport à une surface radiale externe (21b) du corps (21 ; 121) dudit élément femelle (A), cette tête (40e ; 140e) étant engagée entre un premier (33 ; 133) et un deuxième (31 ; 131) composants commandés par une bague principale (30 ; 130) montée autour du corps (21 ; 121) avec possibilité de translation parallèlement à l'axe (X-X') d'emmanchement, la tête (40e ; 140e) étant pourvue d'au moins une oreille (40g ; 140g) définissant une première surface (40h ; 140h), orientée vers la première extrémité (40b ; 140b) et apte à recevoir en appui glissant une surface correspondante (33b ; 133b) du premier composant (33 ; 133), le plan de glissement (P₁ ; P₁₀₁) entre la première surface (40h ; 140h) et la surface correspondante (33b ; 133b) du premier composant étant incliné selon un angle (γ₁ ; γ₁₀₁) compris entre environ 75° et 105° par rapport à l'axe (X₂₇-X'₂₇, X₄₀-X' ₄₀ ; X₁₂₇-X'₁₂₇, X₁₄₀-X'₁₄₀) de translation de l'organe, **caractérisé en ce que** ladite tête (40e ; 140e) comporte deux oreilles (40g ; 140g) disposées de part et d'autre d'une tige (40j ; 140j) de jonction entre la première extrémité (40b ; 140b) et la tête.

2. Elément femelle de raccord selon la revendication 1, **caractérisé en ce que** la première surface (40h) est inclinée selon un angle (γ₁) compris entre environ 75° et 105° par rapport à l'axe (X₂₇-X'₂₇, X₄₀-X'₄₀) de translation de l'organe (40).

3. Elément femelle de raccord selon la revendication 1, **caractérisé en ce que** la surface correspondante (133b) du premier composant (133) est inclinée selon un angle (γ₁₀₁) compris entre environ 75° et 105° par rapport à l'axe (X₁₂₇-X'₁₂₇, X₁₄₀-X'₁₄₀) de translation de l'organe (140).

4. Elément femelle de raccord selon l'une quelconque des revendications précédentes, **caractérisé en ce que** la tête (40e ; 140e) forme au moins une deuxième surface (40i ; 140i), orientée à l'opposé de la première extrémité (40b ; 140b) et apte à recevoir en appui glissant une surface correspondante (31b ; 131b) du deuxième composant (31 ; 131), le plan de glissement (P₂) entre la deuxième surface (40i ; 140i) et la surface correspondante (31b ; 131b) du deuxième composant étant incliné selon un angle (γ₂ ; γ₁₀₂) compris entre environ 75° et 105° par rapport à l'axe (X₂₇-X'₂₇, X₄₀-X'₄₀; X₁₂₇-X'₁₂₇, X₁₄₀-X'₁₄₀) de translation de l'organe (40 ; 140).

5. Elément femelle de raccord selon l'une quelconque des revendications précédentes, **caractérisé en ce que** le plan de glissement (P₁; P₁₀₁) entre la première surface (40h ; 140h) et la surface correspondante (33b ; 133b) du premier composant (33 ; 133) est incliné par rapport à l'axe (X₂₇-X'₂₇, X₄₀-X'₄₀ ; X₁₂₇-X'₁₂₇, X₁₄₀-X'₁₄₀) de translation de l'organe (40 ; 140) selon un angle (γ₁ ; γ₁₀₁) compris entre environ 75° et 90°.

6. Elément femelle de raccord selon les revendications 4 ou 5, **caractérisé en ce que** le plan de glissement (P₂) entre la deuxième surface (40i ; 140i) et la surface correspondante (31b ; 131b) du deuxième composant (31 ; 131) est incliné par rapport à l'axe (X₂₇-X'₂₇, X₄₀-X'₄₀ ; X₁₂₇-X'₁₂₇, X₁₄₀-X'₁₄₀) de translation de l'organe (40 ; 140) selon un angle (γ₂ ; γ₁₀₂) compris entre environ 75° et 90°.

7. Elément femelle de raccord selon l'une quelconque des revendications précédentes, **caractérisé en ce que** la tige (40j ; 140j) de l'organe (40 ; 140) est destinée à être reçue dans une fente (33a ; 135a) du premier composant (33 ; 133), la première surface (40h ; 140h) définie par chaque oreille (40g ; 140g) étant apte à recevoir en appui glissant une surface correspondante (33b ; 133b) d'une portion latérale (33d ; 134) de la fente (33a ; 135a).

8. Elément femelle de raccord selon l'une quelconque des revendications précédentes, **caractérisé en ce que** le premier composant (33 ; 133) est formé par une bague fendue (33 ; 135) distincte de la bague principale (30 ; 130) et apte à être déplacée en translation, parallèlement à l'axe (X-X') d'emmanchement et en direction de l'organe (40 ; 140), sous l'action de la bague principale.

9. Elément femelle de raccord selon l'une quelconque des revendications précédentes, **caractérisé en ce que** le deuxième composant est une bague secondaire (31) distincte de la bague principale (30) et apte à coulisser par rapport à la bague principale, parallèlement à l'axe (X-X') d'emmanchement, sous l'action de l'organe (40) et de moyens élastiques (32).

10. Elément femelle de raccord selon l'une quelconque des revendications 1 à 8, **caractérisé en ce qu'**une même bague (135) distincte de la bague principale (130) constitue les premier (133) et deuxième (131) composants et est apte à être déplacée en translation, parallèlement à l'axe (X-X') d'emmanchement, sous l'action de la bague principale et de moyens élastiques (132).

11. Elément femelle de raccord selon la revendication 10, **caractérisé en ce que** chaque oreille (140g) de l'organe de verrouillage (140) est apte à être reçue dans une rainure (134) de la bague (135) constituant les premier (133) et deuxième (131) composants, la première surface (140h) définie par l'oreille (140g) étant apte à recevoir en appui glissant une surface correspondante (133b) d'un bord (133d) de la rainure (134), ce bord appartenant au premier composant (133).

12. Raccord rapide (R) pour installation de manutention de fluide sous pression comprenant un élément femelle (A) et un élément mâle (B) propres à s'emmancher axialement l'un dans l'autre, **caractérisé en ce que** l'élément femelle (A) est selon l'une quelconque des revendications précédentes.

## Claims

1. A female element (A) of a rapid coupling (R) intended for the removable joining of pipelines (C₁, C₂) for fluid under pressure, said element (A) being adapted to receive a male element (B) inserted therein along a longitudinal axis (X-X'), said female element (A) being equipped with at least one elongate locking member (40; 140), movable in translation parallel to an axis (X₂₇-X'₂₇, X₄₀-X'₄₀; X₁₂₇-X'₁₂₇, X₁₄₀-X'₁₄₀) oblique with respect to the axis of insertion (X-X') of said elements one into the other, the member being provided with a first end (40b; 140b), intended to be engaged in a peripheral groove (16) of a male element (B) inserted in said female element (A), and with a head (40e; 140e) protruding radially with respect to an outer radial surface (21b) of the body (21; 121) of said female element (A), the head (40e; 140e) being engaged between a first (33; 133) and a second (31; 131) component which are controlled by a main ring (30; 130) mounted round the body (21; 121) with the possibility of translation parallel to the axis (X-X') of insertion, the head (40e; 140e) being provided with at least one lug (40g; 140g) defining a first surface (40h; 140h), oriented towards the first end (40b; 140b) and adapted to receive in sliding contact a corresponding surface (33b; 133b) of the first component (33; 133), the sliding plane (P₁; P₁₀₁) between the first surface (40h; 140h) and the corresponding surface (33b; 133b) of the first component being inclined at an angle (γ₁, γ₁₀₁) of between around 75° and 105° with respect to the axis (X₂₇-X'₂₇, X₄₀-X'₄₀; X₁₂₇-X'₁₂₇, X₁₄₀-X'₁₄₀) of translation of the member, **characterized in that** said head (40e; 140e) has two lugs (40g; 140g) arranged on either side of a stem (40j; 140j) for connection between the first end (40b; 140b) and the head.

2. A female coupling element according to claim 1, **characterized in that** the first surface (40h) is inclined at an angle (γ₁) of between around 75° and 105° with respect to the axis (X₂₇-X'₂₇, X₄₀-X'₄₀) of translation of the member (40).

3. A female coupling element according to claim 1, **characterized in that** the corresponding surface (133b) of the first component (133) is inclined at an angle (γ₁₀₁) of between around 75° and 105° with respect to the axis (X₁₂₇-X'₁₂₇, X₁₄₀-X'₁₄₀) of translation of the member (140).

4. A female coupling element according to any one of the preceding claims, **characterized in that** the head (40e; 140e) forms at least a second surface (40i; 140i), oriented opposite from the first end (40b; 140b) and adapted to receive in sliding contact a corresponding surface (31b; 131b) of the second component (31; 131), the sliding plane (P₂) between the second surface (40i; 140i) and the corresponding surface (31b; 131b) of the second component being inclined at an angle (γ₂; γ₁₀₂) of between around 75° and 105° with respect to the axis (X₂₇-X'₂₇, X₄₀-X'₄₀ ; X₁₂₇-X'₁₂₇, X₁₄₀-X'₁₄₀) of translation of the member (40; 140).

5. A female coupling element according to any one of the preceding claims, **characterized in that** the sliding plane (P₁; P₁₀₁) between the first surface (40h; 140h) and the corresponding surface (33b; 133b) of the first component (33; 133) is inclined with respect to the axis (X₂₇-X'₂₇, X₄₀-X'₄₀; X₁₂₇-X'₁₂₇, X₁₄₀-X'₁₄₀) of translation of the member (40; 140) at an angle (γ₁; γ₁₀₁) of between around 75° and 90°.

6. A female coupling element according to claims 4 or 5, **characterized in that** the sliding plane (P₂) between the second surface (40i; 140i) and the corresponding surface (31b; 131b) of the second component (31; 131) is inclined with respect to the axis (X₂₇-X'₂₇, X₄₀-X'₄₀; X₁₂₇-X'₁₂₇, X₁₄₀-X'₁₄₀) of translation of the member (40; 140) at an angle (γ₂; γ₁₀₂) of between around 75° and 90°.

7. A female coupling element according to any one of the preceding claims, **characterized in that** the stem (40j; 140j) of the member (40; 140) is intended to be received in a slot (33a; 135a) of the first component (33; 133), the first surface (40h; 140h) defined by each lug (40g; 140g) being adapted to receive in sliding contact a corresponding surface (33b; 133b) of a lateral portion (33d; 134) of the slot (33a; 135a).

8. A female coupling element according to any one of the preceding claims, **characterized in that** the first component (33; 133) is formed by a slotted ring (33; 135) separate from the main ring (30; 130) and adapted to be displaced in translation, parallel to the insertion axis (X-X') and in the direction of the member (40; 140), under the action of the main ring.

9. A female coupling element according to any one of the preceding claims, **characterized in that** the second component is a secondary ring (31) separate from the main ring (30) and adapted to slide with respect to the main ring, parallel to the insertion axis (X-X'), under the action of the member (40) and of resilient means (32).

10. A female coupling element according to any one of claims 1 to 8, **characterized in that** a single ring (135) separate from the main ring (130) constitutes the first (133) and second (131) components and is adapted to be displaced in translation, parallel to the insertion axis (X-X'), under the action of the main ring and of resilient means (132).

11. A female coupling element according to claim 10, **characterized in that** each lug (140g) of the locking member (140) is adapted to be received in a recess (134) of the ring (135) constituting the first (133) and second (131) components, the first surface (140h) defined by the lug (140g) being adapted to receive in sliding contact a corresponding surface (133b) of an edge (133d) of the recess (134), which edge belongs to the first component (133).

12. A rapid coupling (R) for an installation for handling fluid under pressure comprising a female element (A) and a male element (B) which are suitable for being inserted axially one into the other, **characterized in that** the female element (A) is according to any one of the preceding claims.

## Patentansprüche

1. Aufnahmeelement (A) einer Schnellkupplung (R), die zur lösbaren Verbindung von Leitungen (C₁, C₂) für ein unter Druck stehendes Fluid vorgesehen ist, wobei das Element (A) geeignet ist, ein Einsteckelement (B) in, gemäß einer Längsachse (X-X'), ineinander gesteckter Weise aufzunehmen, und das Aufnahmeelement (A) mit mindestens einem langgestreckten Verriegelungsorgan (40; 140) ausgerüstet ist, das translatorisch parallel zu einer Achse (X₂₇-X'₂₇; X₄₀-X'₄₀; X₁₂₇-X'₁₂₇; X₁₄₀-X'₁₄₀) beweglich ist, die schräg zu der Einsteckachse (X-X') der Elemente ist, wobei dieses Organ mit einem erstem Ende (40b; 140b), das vorgesehen ist, in eine Umfangsnut (16) eines in das Aufnahmeelement (A) eingesteckten Einsteckelements (B) in Eingriff zu treten, und einem Kopf (40e; 140e) versehen ist, der radial in Bezug auf eine radiale Außenfläche (21b) des Körpers (21; 121) des Aufnahmeelements (A) hervorspringt, wobei dieser Kopf (40e; 140e) zwischen einer ersten (33; 133) und einer zweiten (31; 131) Komponente in Eingriff ist, die von einer Haupthülse (30; 130) gesteuert werden, die um den Körper (21; 121) mit der Möglichkeit der Längsbewegung parallel zur Einsteckachse (X-X') montiert ist, wobei der Kopf (40e; 140e) mit mindestens einem Ohr (40g; 140g) versehen ist, das eine erste Fläche (40h; 140h) definiert, die zu dem ersten Ende (40b; 140b) gerichtet ist und geeignet ist, in gleitender Auflage eine korrespondierende Fläche (33b; 133b) der ersten Komponente aufzunehmen, wobei die Gleitebene (P₁; P₁₀₁) zwischen der ersten Fläche (40h; 140h) und der korrespondierenden Fläche (33b; 133b) der ersten Komponente gemäß einem Winkel (γ₁; γ₁₀₁) geneigt ist, der ungefähr zwischen 75° und 105° in Bezug auf die Achse (X₂₇-X'₂₇, X₄₀-X'₄₀; X₁₂₇-X'₁₂₇, X₁₄₀-X'₁₄₀) der Längsbewegung des Organs liegt, **dadurch gekennzeichnet, dass** der Kopf (40e; 140e) zwei Ohren (40g; 140g) aufweist, die beidseitig eines Stiftes (40j; 140j) zur Verbindung des ersten Endes (40b; 140b) und des Kopfes angeordnet sind.

2. Aufnahmeelement einer Kupplung nach Anspruch 1, **dadurch gekennzeichnet, dass** die erste Fläche (40h) gemäß einem Winkel (γ₁) geneigt ist, der zwischen ungefähr 75° und 105° in Bezug auf die Achse (X₂₇-X'₂₇, X₄₀-X'₄₀) der Längsbewegung des Organs (40) liegt.

3. Aufnahmeelement einer Kupplung nach Anspruch 1, **dadurch gekennzeichnet, dass** die korrespondierende Fläche (133b) der ersten Komponente (133) gemäß einem Winkel (γ₁₀₁) geneigt ist, der zwischen ungefähr 75° und 105° in Bezug auf die Achse (X₁₂₇-X'₁₂₇, X₁₄₀-X'₁₄₀) der Längsbewegung des Organs (140) liegt.

4. Aufnahmeelement einer Kupplung nach einem beliebigen der vorhergehenden Ansprüche, **dadurch gekennzeichnet, dass** der Kopf (40e; 140e) mindestens eine zweite Fläche (40i; 140i) bildet, die entgegengesetzt zum ersten Ende (40b; 140b) gerichtet ist und geeignet ist, in gleitender Auflage eine korrespondierende Fläche (31b; 131b) der zweiten Komponente (31; 131) aufzunehmen, wobei die Gleitebene (P₂) zwischen der zweiten Fläche (40i; 140i) und der korrespondierenden Fläche (31b; 131b) der zweiten Komponente gemäß einen Winkel (γ₂; γ₁₀₂) geneigt ist, der ungefähr zwischen 75° und 105° in Bezug auf die Achse (X₂₇-X'₂₇; X₄₀-X'₄₀; X₁₂₇-X'₁₂₇; X₁₄₀-X'₁₄₀) der Längsbewegung des Organs (40; 140) liegt.

5. Aufnahmeelement einer Kupplung nach einem beliebigen der vorhergehenden Ansprüche, **dadurch gekennzeichnet, dass** die Gleitebene (P₁; P₁₀₁) zwischen der ersten Fläche (40h; 140h) und der korrespondierenden Fläche (33b; 133b) der ersten Komponente (33; 133) in Bezug auf die Achse (X₂₇-X'₂₇; X₄₀-X'₄₀; X₁₂₇-X'₁₂₇; X₁₄₀-X'₁₄₀) der Längsbewegung des Organs (40; 140) gemäß einem Winkel (γ₁; γ₁₀₁) geneigt ist, der ungefähr zwischen 75° und 90° liegt.

6. Aufnahmeelement einer Kupplung nach einem der Ansprüche 4 oder 5, **dadurch gekennzeichnet, dass** die Gleitebene (P₂) zwischen der zweiten (40i; 140i) und der korrespondierenden Fläche (31b; 131b) der zweiten Komponente (31; 131) in Bezug auf die Achse (X₂₇-X'₂₇; X₄₀-X'₄₀; X₁₂₇-X'₁₂₇; X₁₄₀-X'₁₄₀) der Längsbewegung des Organs (40; 140) gemäß einem Winkel (γ₂; γ₁₀₂) geneigt ist, der zwischen ungefähr 75° und 90° liegt.

7. Aufnahmeelement einer Kupplung nach einem beliebigen der vorhergehenden Ansprüche, **dadurch gekennzeichnet, dass** der Stift (40j; 140j) des Organs (40; 140) vorgesehen ist, in einem Spalt (33a; 135a) der ersten Komponente (33; 133) aufgenommen zu werden, wobei die von jedem Ohr (40g; 140g) definierte erste Fläche (40h; 140h) geeignet ist, in gleitender Auflage eine korrespondierende Fläche (33b; 133b) eines Seitenbereichs (33d; 134) des Spalts (33; 135a) aufzunehmen.

8. Aufnahmeelement einer Kupplung nach einem beliebigen der vorhergehenden Ansprüche, **dadurch gekennzeichnet, dass** die erste Komponente (33; 133) von einer gespaltenen Hülse (33; 135) gebildet ist, die sich von der Haupthülse (30; 130) unterscheidet und geeignet ist, in Längsbewegung parallel zur Einsteckachse (X-X') und in Richtung des Organs (40; 140) unter der Wirkung der Haupthülse verschoben zu werden.

9. Aufnahmeelement einer Kupplung nach einem beliebigen der vorhergehenden Ansprüche, **dadurch gekennzeichnet, dass** die zweite Komponente eine Nebenhülse (31) ist, die sich von der Haupthülse (30) unterscheidet und geeignet ist, in Bezug auf die Haupthülse parallel zur Einsteckachse (X-X') unter der Wirkung des Organs (40) und von elastischen Mitteln (32) zu gleiten.

10. Aufnahmeelement einer Kupplung nach einem beliebigen der vorhergehenden Ansprüche 1 bis 8, **dadurch gekennzeichnet, dass** eine selbe Hülse (135), die verschieden zur Haupthülse (130) ist, die erste (133) und die zweite (131) Komponente bildet und geeignet ist, translatorisch parallel zur Einsteckachse (X-X') unter der Wirkung der Haupthülse und von elastischen Mitteln (132) bewegt zu werden.

11. Aufnahmeelement einer Kupplung nach Anspruch 10, **dadurch gekennzeichnet, dass** jedes Ohr (140g) des Verriegelungsorgans (140) geeignet ist, in einer ersten Nut (134) der Hülse (135) aufgenommen zu werden, die die erste (133) und die zweite (131) Komponente bildet, wobei die erste von dem Ohr (140g) definierte Fläche (140h) geeignet ist, in gleitender Auflage eine korrespondierende Fläche (133b) eines Randes (133d) der Nut (134) aufzunehmen, wobei dieser Rand zur ersten Komponente (133) gehört.

12. Schnellkupplung (R) für eine Anlage zur Förderung von unter Druck stehendem Fluid, die ein Aufnahmeelement (A) und ein Einsteckelement (B) umfasst, die axial ineinandergreifen können, **dadurch gekennzeichnet, dass** das Aufnahmeelement (A) nach einem beliebigen der vorhergehenden Ansprüche ausgebildet ist.
